(19)

Europäisches Patentamt

European Patent Office

Office européen des brevets

(11) **EP 2 879 313 A1**

(12) **EUROPEAN PATENT APPLICATION**
published in accordance with Art. 153(4) EPC

(43) Date of publication:
**03.06.2015 Bulletin 2015/23**

(21) Application number: **13822465.4**

(22) Date of filing: **22.03.2013**

(51) Int Cl.:
*H04B 10/112* (2013.01)     *G01S 3/786* (2006.01)
*G05B 11/36* (2006.01)

(86) International application number:
**PCT/JP2013/001974**

(87) International publication number:
**WO 2014/016989 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.07.2012   JP 2012163539**

(71) Applicant: **NEC Corporation
Tokyo 108-8001 (JP)**

(72) Inventor: **SHIMIZU, Motoaki
Tokyo 108-8001 (JP)**

(74) Representative: **Vossius & Partner
Patentanwälte Rechtsanwälte mbB
Siebertstrasse 3
81675 München (DE)**

(54) **COOPERATIVE CONTROL DEVICE, COOPERATIVE CONTROL METHOD, AND RECORDING MEDIUM HAVING COOPERATIVE CONTROL PROGRAM STORED THEREIN**

(57)     A cooperative control device is provided in which position information on a node (1) of the device and a facing node (2) are acquired by a device node position information acquisition unit (8) and a facing node position information acquisition unit (14). The position information is used to calculate a position-information-based target angle of a first orientation means (3) by a position-information-based orientation angle generator (15). The position-information-based target angle is converted, by applying kinematics, to a kinematics-used target angle of the first orientation means by the converter (16). Subsequently, the position-information-based target angle of the first orientation means (3) is subtracted from the kinematics-used target angle to obtain a target error angle, and the target error angle is then integrated by an integrator (17). The integrated target error angle is added to the position-information-based target angle of the first orientation means (3) by an adder (18) to output a target angle of the first orientation means (3) for cooperative control, the target angle being capable of removing an orientation angle error of a second orientation means (4). This operation ensures that the orientation angle of the first orientation means can reach the target angle of the first orientation means, and the orientation angle error of the second orientation means can be canceled.

Fig.3

**Description**

[Technical Field]

The present invention relates to a cooperative control device, a cooperative control method, and a cooperative control program. Specifically, the present invention relates to a cooperative control device, a cooperative control method, and a cooperative control program that are capable of, in two orientation means used for receiving optical signals from a facing node, causing an orientation angle of a first orientation means to reach a target angle of the first orientation means and cancel an orientation angle error of a second orientation means by using an integration result of sequentially integrating an orientation angle error of the first orientation means at each calculation cycle, the orientation angle error of the first orientation means being obtained by applying kinematics to the orientation angle error of the second orientation means.

[Background Art]

A related technology described in NPL 1 "A Cooperative Control Algorithm of the On Board Tracking Control System for Free-Space Optical Communications" (Motoaki Shimizu et al., the 49th Aircraft Symposium) includes two orientation means, namely, a first orientation means (e.g., a gimbal), and a second orientation means (e.g., a fine pointing mechanism (FPM)) provided on the first orientation means for fine pointing, as orientation means that enable tracking and receiving of optical signals from a facing node when conducting free-space optical communications with the facing node. Here, a relation represented by the following kinematic and geometric transformation expression presented as expression (1) is established between an orientation angle error $\alpha$ of the second orientation means, an orientation angle $\theta_g$ of the first orientation means, and a target angle $\theta'_g$ of the first orientation means.

[Mathematical Expression 1]

$$\theta'_g = \sin^{-1}\left(\sqrt{1 - \tan^2\alpha} \cdot \sin\theta_g - \tan\alpha \cdot \cos\theta_g\right) \qquad \cdots (1)$$

Note that expression (1) is presented for only one axis for simplification, where:

$\alpha$ is an orientation angle error of the second orientation means,

$\theta_g$ is an orientation angle of the first orientation means obtained from position information on a node of the device and a facing node (e.g., position information measured by a global positioning system (GPS)), and

$\theta'_g$ is a target angle of the first orientation means obtained by adding the orientation angle $\theta_g$ of the first orientation means to a value obtained by kinematically transforming the orientation angle error $\alpha$ of the second orientation means to an orientation angle error of the first orientation means.

NPL 1 discloses that the orientation angle error $\alpha$ of the second orientation means can be canceled by converting the orientation angle error $\alpha$ of the second orientation means to the orientation angle error ($\theta'_g - \theta_g$) of the first orientation means using expression (1), and controlling the orientation angle of the first orientation means to change from $\theta_g$ to the target angle $\theta'_g$. Expression (1) is calculated at each predetermined calculation cycle of a central processing unit (CPU).

[Citation List]

[Non Patent Literature]

NPL 1: Motoaki Shimizu et al. (NEC Corporation), "A Cooperative Control Algorithm of the On Board Tracking Control System for Free-Space Optical Communications", the 49th Aircraft Symposium, October 2011.

[Summary of Invention]

[Technical Problem]

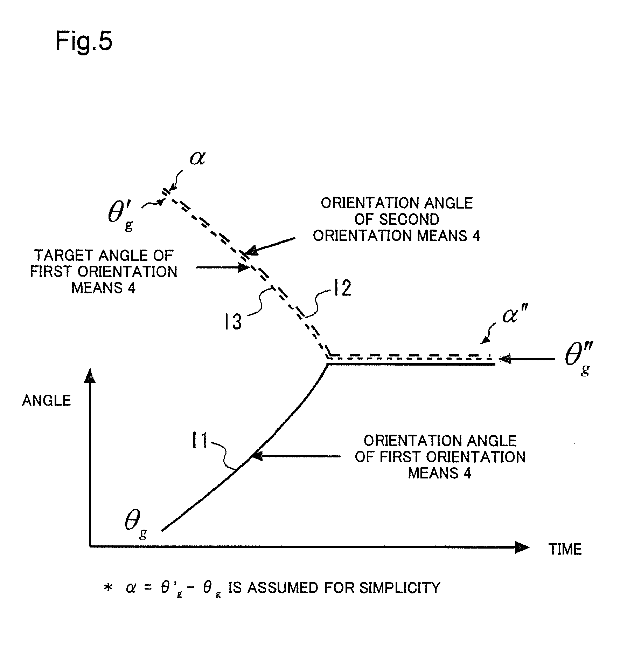

The technique described in NPL 1, however, starts canceling the orientation angle error $\alpha$ of the second orientation means as illustrated by the long-dashed line 12 in Fig. 5 at the same time as the orientation angle of the first orientation means starts being rotated from $\theta_g$ toward the target angle $\theta'_g$ of the first orientation means as illustrated by the solid line 11 in Fig. 5. Consequently, the target angle of the first orientation means is changed from $\theta'_g$ to $\theta''_g$ by

expression (1) as illustrated by the short-dashed line 13 in Fig. 5. This prevents the orientation angle of the first orientation means from reaching the initial target angle $\theta'_g$, and the orientation angle of the first orientation means stabilizes when it is rotated to $\theta''_g$. In addition, the orientation angle error of the second orientation means changes from $\alpha$ not to '0', which means the error is not canceled, but turns to $\alpha''$. As a result, there is a problem that the orientation angle error $\alpha$ of the second orientation means cannot be canceled. Fig. 5 is an explanatory diagram illustrating the problem of the conventional technique described in NPL 1. In Fig. 5,

$$\alpha = \theta'_g - \theta_g$$

is assumed to simplify explanation.

(Object of the Present Invention)

In view of the above-described problem, it is an object of the present invention to provide a cooperative control device, a cooperative control method, and a cooperative control program that are capable of, in two orientation means used for receiving optical signals, causing an orientation angle of a first orientation means to surely reach a target angle of the first orientation means and reliably cancel an orientation angle error of a second orientation means.

[Solution to Problem]

In order to solve the above-described problem, a cooperative control device, a cooperative control method, and a cooperative control program according to the present invention mainly employ characteristic configurations as described below.

(1) A cooperative control device according to the present invention cooperatively controls two orientation means of a first orientation means and a second orientation means included as orientation means used for receiving optical signals from a facing node. The cooperative control device includes at least:

a position information acquisition means for acquiring position information on a node of the device and the facing node, or both of the position information and attitude information on the node and the facing node;

an orientation angle generation means for calculating a position-information-based target angle of the first orientation means using the position information on the node and the facing node acquired by the position information acquisition means, or both of the position information and the attitude information on the node and the facing node; and

a conversion means for converting the position-information-based target angle of the first orientation means calculated by the orientation angle generation means to a kinematics-used target angle of the first orientation means by applying kinematics to an orientation angle error of the second orientation means, the kinematics-used target angle of the first orientation means being used for removing the orientation angle error of the second orientation means.

The cooperative control device further includes:

an integration means for integrating a target error angle of the first orientation means obtained by subtracting the position-information-based target angle of the first orientation means from the kinematics-used target angle of the first orientation means converted by the conversion means; and

an addition means for adding the target error angle of the first orientation means integrated by the integration means to the position-information-based target angle of the first orientation means, to output a target angle of the first orientation means for cooperative control, the target angle for cooperative control being capable of removing the orientation angle error of the second orientation means.

(2) A cooperative control method according to the present invention cooperatively controls two orientation means of a first orientation means and a second orientation means included as orientation means used for receiving optical signals from a facing node. The cooperative control method includes at least:

a step for acquiring position information on a node of the device and the facing node, or both of the position information and attitude information on the node and the facing node;

a step for generating an orientation angle by calculating a position-information-based target angle of the first orientation means using the position information on the node and the facing node acquired by the step for acquiring, or both of the position information and the attitude information on the node and the facing node;
a step for converting the position-information-based target angle of the first orientation means calculated by the step for generating to a kinematics-used target angle by applying kinematics to an orientation angle error of the second orientation means, the kinematics-used target angle being used for removing the orientation angle error of the second orientation means.

The cooperative control method further includes:

a step for integrating a target error angle of the first orientation means obtained by subtracting the position-information-based target angle of the first orientation means from the kinematics-used target angle of the first orientation means converted by the step for converting; and

a step for adding the target error angle of the first orientation means integrated by the step for integrating to the position-information-based target angle of the first orientation means, to output a target angle of the first orientation means for cooperative control, the target angle being capable of removing the orientation angle error of the second orientation means.

(3) A cooperative control program according to the present invention can cause a computer to implement at least the cooperative control method described in (2).

[Advantageous Effects of Invention]

The cooperative control device, the cooperative control method, and the cooperative control program of the present invention provide the following advantageous effects.

In two orientation means of a first orientation means and a second orientation means used for receiving optical signals from a facing node, an orientation angle error of the first orientation means is obtained by applying kinematics to an orientation angle error of the second orientation means. The obtained orientation angle error of the first orientation means is integrated as a target error angle, and then a result of the integration is used to calculate a target angle of the first orientation means. This operation makes it possible to ensure that the orientation angle of the first orientation means reaches the target angle of the first orientation means, and that the orientation angle error of the second orientation means is canceled.

[Brief Description of Drawings]

[Fig. 1] Fig. 1 is a block diagram illustrating an example block structure of a cooperative control device according to an exemplary embodiment of the present invention.
[Fig. 2] Fig. 2 is a calculation flowchart for explaining example operation of the cooperative control device illustrated in Fig. 1 to calculate a target angle for cooperative control.
[Fig. 3] Fig. 3 is an explanatory diagram for explaining an effect of integration performed by an integrator in the cooperative control device illustrated in Fig. 1.

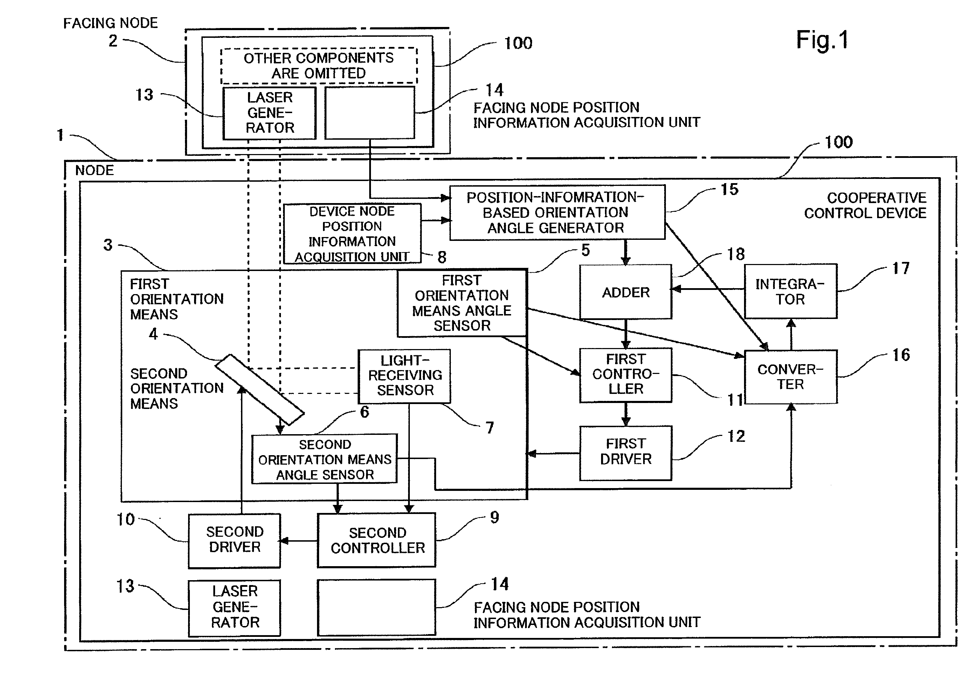

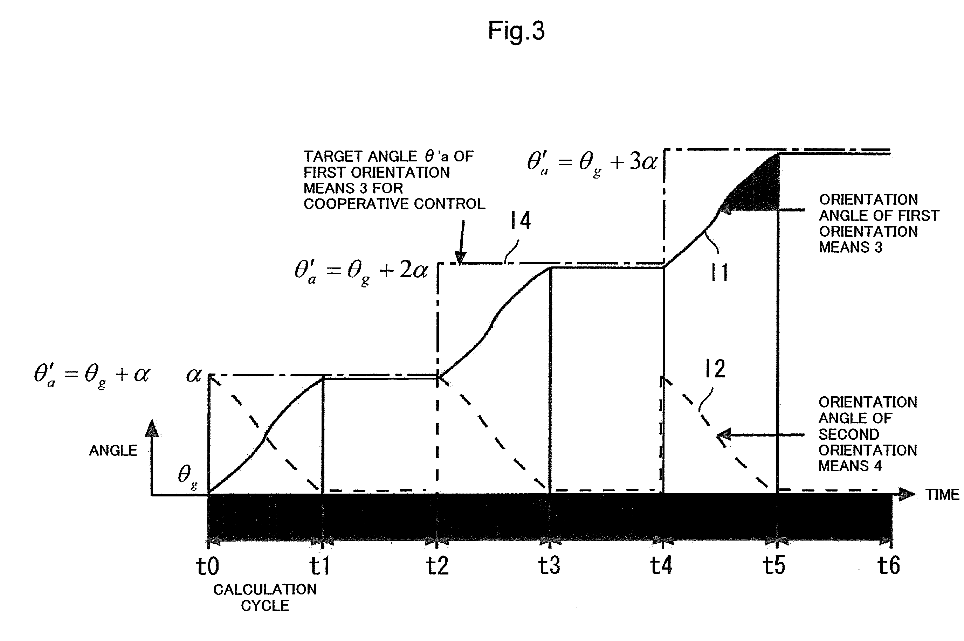

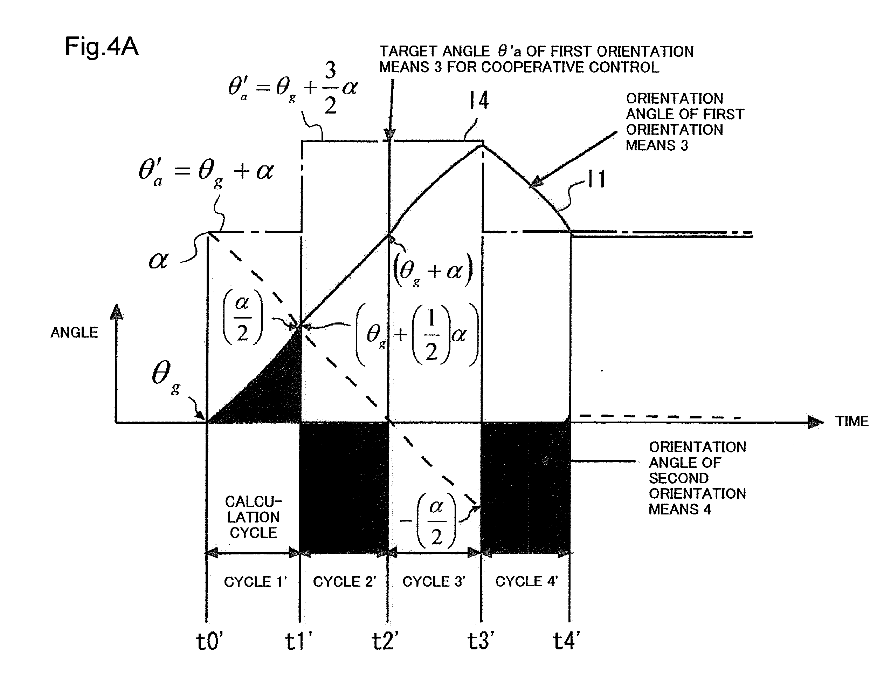

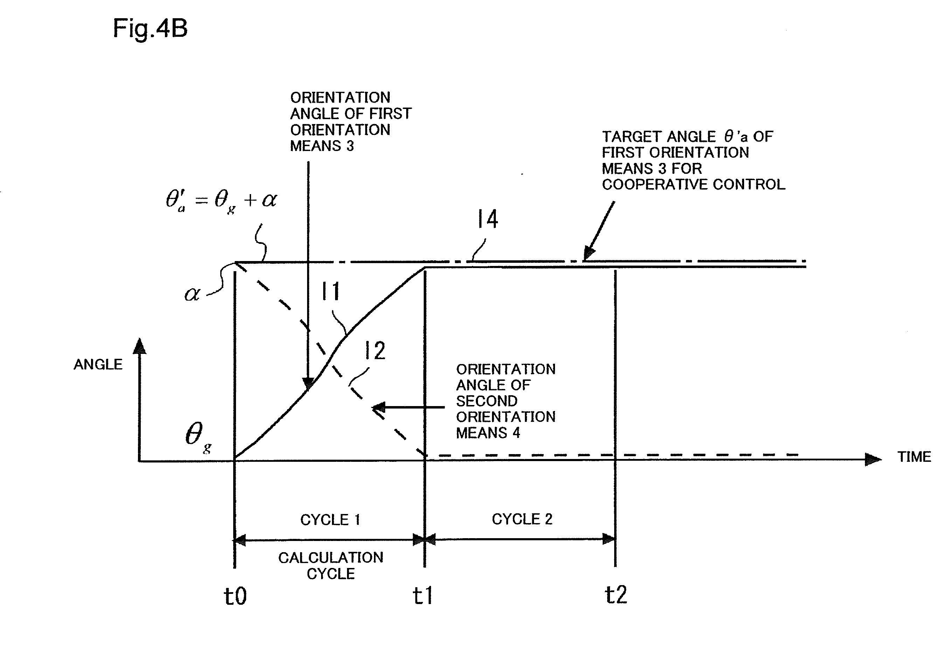

[Fig. 4A] Fig. 4A is an explanatory diagram for explaining an example effect on the integration operation of the integrator in the cooperative control device illustrated in Fig. 1 due to a change in a calculation cycle. Fig. 4A illustrates an operation of the integrator performed when a calculation cycle is set to a half (1/2) of the calculation cycle in the explanatory diagram of Fig. 3. [Fig. 4B] Fig. 4B is an explanatory diagram for explaining an example effect on the integration operation of the integrator in the cooperative control device illustrated in Fig. 1 due to a change in a calculation cycle. Fig. 4B illustrates an operation of the integrator performed when a calculation cycle is set to the same calculation cycle as in the explanatory diagram of Fig. 3.
[Fig. 5] Fig. 5 is an explanatory diagram for explaining a problem of a conventional technique.

[Description of Embodiments]

A preferred exemplary embodiment of a cooperative control device, a cooperative control method, and a cooperative control program according to the present invention will now be described with reference to the accompanied drawings. While the following describes the cooperative control device and the cooperative control method according to the present invention, it is obvious that the cooperative control method may be implemented as a cooperative control program that is capable of causing a computer to carry out the cooperative control method, or may be recorded in a computer-readable recording medium.

(Feature of Present Invention)

An outline of features of the present invention is described before describing the exemplary embodiment of the present invention. The present invention includes two orientation means, namely, a first orientation means (e.g., a gimbal), and a second orientation means (e.g., an FPM) provided on the first orientation means for fine pointing, as orientation means that enable tracking and receiving of optical signals from a facing node when conducting free-space optical communications with the facing node, as in NPL 1. The present invention, however, is different from NPL 1 in that the main feature of the present invention is that an orientation angle of the first orientation means can reach a target angle of the first orientation means by: obtaining an orientation angle error of the first orientation means by applying kinematics to an orientation angle error of the second orientation means, integrating the obtained orientation angle error of the first orientation means, and calculating the target angle of the first orientation means using a result of the integration.

More specifically, the present invention employs the following scheme. First, a position-information-based target angle of the first orientation means is calculated using position information on a node of the device and a facing node. The calculated position-information-based target angle of the first orientation means is converted, by applying kinematics, to a kinematics-used target angle of the first orientation means to remove an orientation angle error of the second orientation means.

Subsequently, the position-information-based target angle of the first orientation means is subtracted from the converted kinematics-used target angle of the first orientation means to obtain a target error angle of the first orientation means. The target error angle of the first orientation means is sequentially integrated at each calculation cycle.

A result of integrating the target error angle at each calculation cycle is added with the position-information-based target angle of the first orientation means to output a target angle of the first orientation means for cooperative control, the target angle being capable of removing the orientation angle error of the second orientation means. This operation is the main feature of the present invention.

The above operation can provide an advantageous effect that ensures a cancellation of the orientation angle error of the second orientation means.

(Example Configuration of Exemplary Embodiment)

The following describes an example configuration of an exemplary embodiment of the cooperative control device according to the present invention with reference to the block diagram of Fig. 1. Fig. 1 is the block diagram illustrating an example block structure of the cooperative control device according to the exemplary embodiment of the present invention. A cooperative control device 100 illustrated in Fig. 1 is exemplified in a case where free-space optical communications are conducted between a node 1 of the device and a facing node 2. For the facing node 2 side, the block structure of the cooperative control device 100 is illustrated only for the blocks necessary for the following explanation, and illustration of the other blocks are omitted.

As illustrated in the node 1 side in Fig. 1, the cooperative control device 100 includes at least a first orientation means 3, a second orientation means 4, a first orientation means angle sensor 5, a second orientation means angle sensor 6, a light-receiving sensor 7, a device node position information acquisition unit 8, a second controller 9, a second driver 10, a first controller 11, a first driver 12, a laser generator 13, a facing node position information acquisition unit 14, a position-information-based orientation angle generator 15, a converter 16, an integrator 17, and an adder 18. In other words, the cooperative control device 100 includes two orientation means, namely, the first orientation means 3 (e.g., an orientation means for coarse control such as a gimbal), and the second orientation means 4 (e.g., an orientation means for fine control such as an FPM) provided on the first orientation means 3 for fine pointing, as orientation means that enable tracking and receiving of optical signals from the laser generator 13 in the facing node 2 when conducting free-space optical communications with the facing node 2. The cooperative control device 100 is configured to cooperatively control the first orientation means 3 and the second orientation means 4 using calculation results from the position-information-based orientation angle generator 15, the integrator 17, and the adder 18.

The second orientation means 4 rotates a mirror thereof about two axes, the mirror receiving light for optical communication generated by the laser generator 13 at the facing node 2 side. The first orientation means 3 further rotates the second orientation means 4 about two axes. The first orientation means angle sensor 5 detects a rotation angle of the first orientation means 3, and is configured using a resolver, for example. Here, the rotation angle of the first orientation means 3 detected by the first orientation means angle sensor 5 is input to the first controller 11 as a current angle of the first orientation means 3. The second orientation means angle sensor 6 directly detects a tilt (rotation angle) of the mirror of the second orientation means 4, and is provided on the second orientation means 4.

The device node position information acquisition unit 8 acquires position information on the node 1 (e.g., position information acquired by a GPS). The facing node position information acquisition unit 14 transmits, to the facing node 2, the position information on the node 1 acquired by the device node position information acquisition unit 8 at the node 1 side as facing-node position information. In the same manner, the facing node position information acquisition unit 14 at the facing node 2 side transmits the position information on the facing node 2 to the node 1 as facing-node position information. The position-information-based orientation angle generator 15 generates a position-information-based target angle of the first orientation means 3 using the facing-node position information acquired from the facing node position information acquisition unit 14 at the facing node 2 side and device node position information acquired by the device node position information acquisition unit 8.

The first controller 11 performs phase compensation using: the position-information-based target angle of the first orientation means 3 output from the position-information-based orientation angle generator 15 through the adder 18, or a kinematics-used target angle of the first orientation means 3 obtained by the adder 18 adding the position-information-based target angle of the first orientation means 3 and a result of the integration by the integrator 17; and an angle (defined as a current angle) detected by the first orientation means angle sensor 5. The first controller 11 then generates a control signal for the first orientation means 3, outputs the control signal to the first orientation means 3 via the first driver 12 to orient the first orientation means 3 at the target angle. Consequently, light for optical communication emitted by the laser generator 13 at the facing node 2 side is incident on and reflected by the mirror of the second orientation means 4 and is directed to the light-receiving sensor 7 (e.g., a quadrisected light-receiving element).

The second controller 9 sets a target angle of the second orientation means 4 to zero degrees, generates a current angle that is an orientation angle error of the second orientation means 4 by selecting either an output of the light-receiving sensor 7 or an output of the second orientation means angle sensor 6, and performs phase compensation using the target angle and the current angle of the second orientation means 4. The second controller 9 then generates a control signal for the second orientation means 4, outputs the control signal to the second orientation means 4 via the second driver 10 to orient the second orientation means 4 at the target angle (in this case, zero degrees).

The converter 16 converts the position-information-based target angle of the first orientation means 3, generated by the position-information-based orientation angle generator 15, to the kinematics-used target angle of the first orientation means 3 by applying kinematics to the orientation angle error of the second orientation means 4. This conversion is performed to remove the orientation angle error of the second orientation means 4 based on the tilt (rotation angle) of the mirror, that is, the orientation angle error of the second orientation means 4, detected by the second orientation means angle sensor 6 and the rotation angle of the first orientation means 3 detected by the first orientation means angle sensor 5.

The integrator 17 sequentially integrates, at each predetermined calculation cycle, a target error angle obtained by subtracting the position-information-based target angle of the first orientation means 3 generated by the position-information-based orientation angle generator 15 from the kinematics-used target angle of the first orientation means 3 converted by the converter 16. Consequently, the adder 18 adds a result of the integration by the integrator 17 to the position-information-based target angle of the first orientation means 3 output from the position-information-based orientation angle generator 15, thereby outputting, to the first controller 11, a result of the addition as a target angle for the first controller 11, that is, as a target angle of the first orientation means 3 for cooperative control, the target angle being capable of removing the orientation angle error of the second orientation means 4.

When rotation angles of the two respective axes of the first orientation means 3 that are output from the first orientation means angle sensor 5 are defined as an azimuth (AZ) axis $\Psi$ and an elevation (EL) axis $\theta$, the target angles $\Psi_g$ and $\theta_g$ of the first orientation means 3 generated by the position-information-based orientation angle generator 15 are given by the following expressions (2) and (3). The target angles $\Psi_g$ and $\theta_g$ of the first orientation means 3 given by expressions (2) and (3) are referred to as "position-information-based target angles" in the present exemplary embodiment.

[Mathematical Expression 2]

$$\psi_g = \tan^{-1}\left(\frac{b}{a}\right) \qquad \cdots (2)$$

$$\theta_g = -\cos\left(\frac{c}{l_t}\right) \qquad \cdots (3)$$

The variables a, b, and c are, as described in NPL 1, defined by target vectors from the device node position information to the facing node position information represented by expressions (4) and (5).

[Mathematical Expression 3]

$$\begin{bmatrix} a & b & c \end{bmatrix}^T \qquad \cdots (4)$$

$$l_t = \sqrt{a^2 + b^2 + c^2} \qquad \cdots (5)$$

If the orientation angle of the first orientation means 3 is correctly oriented at the target angles $\Psi_g$ and $\theta_g$ represented by expressions (2) and (3), that is, the "position-information-based target angles", it is regarded that the second controller 9 controls both axes of the second orientation means 4 at zero degrees using outputs from the light-receiving sensor 7. At the same time, it is regarded that outputs from the second orientation means angle sensor 6 are zero degrees for both axes.

Subsequently, it is assumed that one of the facing node 2 and the node 1 moves and an optical axis of a light beam emitted by the laser generator 13 in the facing node 2 shifts to tilt the mirror of the second orientation means 4, and the rotation angles of the two axes output from the second orientation means angle sensor 6 are changed, that is, X axis is changed from zero degrees to $\alpha$ degrees ($\neq 0$) and Y axis is changed from zero degrees to P degrees ($\neq 0$). In this case, the target angles $\Psi'_g$ and $\theta'_g$ of the first orientation means 3, the target angles being capable of canceling the rotation angles (that is, the orientation angle errors) of the two axes of the second orientation means 4 by kinetic formulation between the first orientation means 3 and the second orientation means 4 are given by the following expressions (6) and (7), as described in NPL 1. The target angles $\Psi'_g$ and $\theta'_g$ of the first orientation means 3 given by expressions (6) and (7) are referred to as "kinematics-used target angles" in the present exemplary embodiment.

[Mathematical Expression 4]

$$\psi'_g = \tan^{-1} \frac{\sin\psi_g \left( \sqrt{1 - \tan^2\alpha - \tan^2\beta} \cdot \sin\theta_g + \tan\alpha \cdot \cos\theta_g \right) + \cos\psi_g \cdot \tan\beta}{\cos\psi_g \left( \sqrt{1 - \tan^2\alpha - \tan^2\beta} \cdot \sin\theta_g + \tan\alpha \cdot \cos\theta_g \right) - \sin\psi_g \cdot \tan\beta}$$

$$\cdots (6)$$

$$\theta'_g = -\cos^{-1} \left( \sqrt{1 - \tan^2\alpha - \tan^2\beta} \cdot \cos\theta_g - \tan\alpha \cdot \sin\theta_g \right) \qquad \cdots (7)$$

As described above, in order to solve the problem of a conventional technique that an orientation angle of the first orientation means 3 cannot reach a target angle and an orientation angle error $\alpha$ of the second orientation means 4 cannot be canceled, the present exemplary embodiment includes: the integrator 17 that integrates target error angles obtained by subtracting the "position-information-based target angles $\Psi_g$ and $\theta_g$" of the first orientation means 3 given by expressions (2) and (3) from the "kinematics-used target angles $\Psi'_g$ and $\theta'_g$" of the first orientation means 3 given by expressions (6) and (7), and the adder 18 that adds a result of the integration by the integrator 17 to the "position-information-based target angles $\Psi_g$ and $\theta_g$" of the first orientation means 3.

The following describes a procedure of integration by the integrator 17 and a procedure of addition by the adder 18. As represented by the following expressions (8) and (9), subtraction processing of "kinematics-used target angles $\Psi'_g$ and $\theta'_g$" - "position-information-based target angles $\Psi_g$ and $\theta_g$" is performed at each calculation cycle and a result of the subtraction is integrated by the integrator 17 as a target error angle at each calculation cycle.

[Mathematical Expression 5]

$$\Delta\psi'_{gsum} = \sum \left( \psi'_g - \psi_g \right) \qquad \cdots (8)$$

$$\Delta\theta'_{gsum} = \sum \left( \theta'_g - \theta_g \right) \qquad \cdots (9)$$

As represented by the following expressions (10) and (11), the target angles $\Psi'_a$ and $\theta'_a$ of the first orientation means 3 for cooperative control are obtained by the adder 18 adding integration results $\Delta\Psi'_{gsum}$ and $\Delta\theta'_{gsum}$ given by expressions (8) and (9) to the "position-information-based target angles $\Psi_g$ and $\theta_g$".

[Mathematical Expression 6]

$$\psi'_a = \Delta\psi'_{gsum} + \psi_g \qquad \cdots (10)$$

$$\theta'_a = \Delta\theta'_{gsum} + \theta_g \qquad \cdots (11)$$

When the power is turned on, the integration results $\Delta\Psi'_{gsum}$ and $\Delta\theta'_{gsum}$ from the integrator 17 are initialized as represented by the following expression (12).

[Mathematical Expression 7]

$$\Delta\psi'_{gsum} = \Delta\theta'_{gsum} = 0 \qquad \cdots (12)$$

The "kinematics-used target angles $\Psi'_g$ and $\theta'_g$" of the first orientation means 3 given by expressions (6) and (7) are calculated and output by the converter 16 illustrated in Fig. 1, the integration results $\Delta\Psi'_{gsum}$ and $\Delta\theta'_{gsum}$ given by expressions (8) and (9) are calculated and output by the integrator 17 illustrated in Fig. 1, and the target angles $\Psi'_a$ and $\theta'_a$ of the first orientation means 3 for cooperative control given by expressions (10) and (11) are calculated and output by the adder 18 illustrated in Fig. 1.

(Explanation of Operation in Exemplary Embodiment)

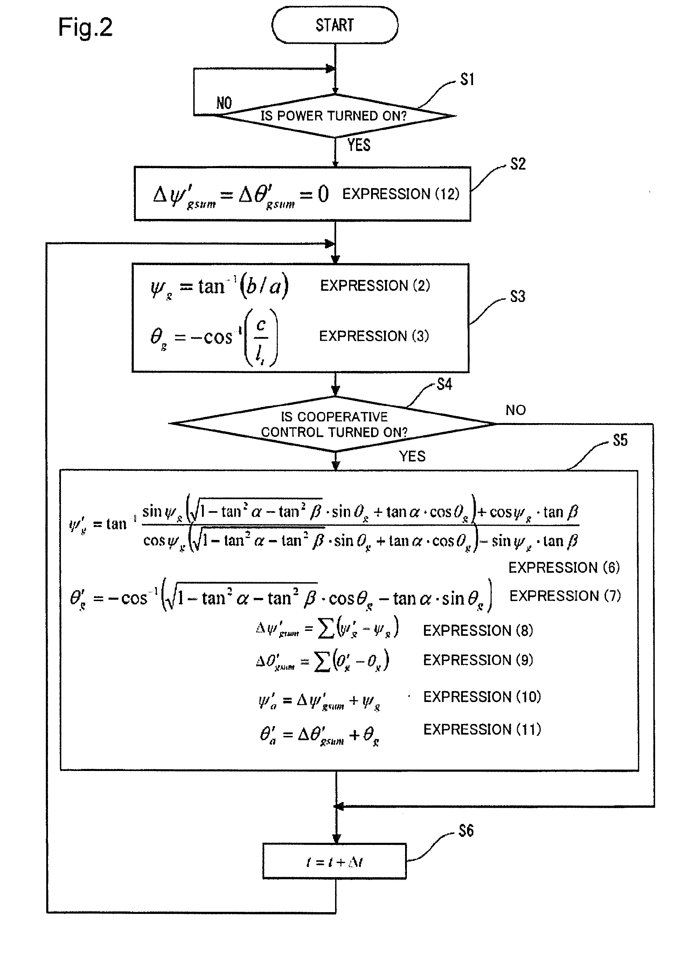

The following describes example operation of the cooperative control device 100 illustrated in Fig. 1 using the calculation flowchart illustrated in Fig. 2. Fig. 2 is the calculation flowchart for explaining example operation of the cooperative control device 100 illustrated in Fig. 1 to calculate a target angle for cooperative control.

In the calculation flowchart illustrated in Fig.2, it is determined whether the power of the cooperative control device 100 is turned on (step S1). If the power is turned on (Yes at step S1), calculation of the above expression (12) is performed, and the integration results $\Delta\Psi'_{gsum}$ and $\Delta\theta'_{gsum}$ from the integrator 17 are initialized (step S2). Subsequently, calculations of the above expressions (2) and (3) are performed to calculate the "position-information-based target angles $\Psi_g$ and $\theta_g$" (step S3).

Next, an instruction of cooperative control between coarse control and fine control is input as a command input by a user, and whether the cooperative control is turned on is checked (step S4). If the cooperative control is not turned on (No at step S4), the calculation at step S5 is skipped and the process proceeds to step S6. If the cooperative control is turned on (Yes at step S4), the calculation at step S5 is performed.

When the process proceeds to step S5, calculations of the above expressions (6) and (7) are performed to calculate the "kinematics-used target angles $\Psi'_g$ and $\theta'_g$", and then calculations of the above expressions (8) and (9) are performed to integrate, at each calculation cycle, the target error angle obtained by the subtraction processing of the "kinematics-used target angles $\Psi'_g$ and $\theta'_g$" - the "position-information-based target angles $\Psi_g$ and $\theta_g$". Subsequently, calculations of expressions (10) and (11) are performed to add the integration results given by expressions (8) and (9) to the "position-information-based target angles $\Psi_g$ and $\theta_g$" to calculate the target angles $\Psi'_a$ and $\theta'_a$ of the first orientation means 3 for cooperative control (step S5).

Next, calculation on time, represented by the following expression (13), is performed to update a calculation cycle to the next cycle. After the calculation cycle is updated (step S6), the process returns to step S3.

[Mathematical Expression 8]

$$t = t + \Delta t \qquad \cdots (13)$$

where $\Delta t$ is a time interval at which a predetermined calculation cycle is given.

Although not illustrated clearly in the calculation flowchart in Fig. 2, when the cooperative control is turned on, the target angles of the first orientation means 3 are the target angles $\Psi'_a$ and $\theta'_a$ of the first orientation means 3 for cooperative control obtained by the calculations of expressions (10) and (11); and when the cooperative control is turned off, the target angles of the first orientation means 3 are the position-information-based target angles $\Psi_g$ and $\theta_g$.

The following further describes, with reference to the explanatory diagram of Fig. 3, the effect of integrating, at each calculation cycle, the target error angles obtained from the subtraction result (the kinematics-used target angles $\Psi'_g$ and $\theta'_g$) - (the position-information-based target angles $\Psi_g$ and $\theta_g$). The integration is performed by the integrator 17 using the above expressions (8) and (9). Fig. 3 is an explanatory diagram for explaining an effect of integration performed by the integrator 17 in the cooperative control device 100 illustrated in Fig. 1. To simplify explanation, only one axis, the EL axis, is illustrated, and it is assumed that only the $\alpha$ for the X axis of the second orientation means 4 affects the EL axis angle $\theta$ of the first orientation means 3.

In the explanatory diagram of Fig. 3, the horizontal axis indicates time, the vertical axis indicates angle, and six calculation cycles from a cycle 1 to a cycle 6 are illustrated, as indicated on the time axis that is the horizontal axis in Fig. 3. The stepwise line rising to the right indicated by the dashed-dotted line 14 in Fig. 3 is a trajectory of the target angle $\theta'_a$ of the first orientation means 3 for cooperative control, the curve rising to the right indicated by the solid line 11 in Fig. 3 is a trajectory of the orientation angle of the first orientation means 3, and the serrated curve indicated by the long-dashed line 12 in Fig.3 is a trajectory of the orientation angle of the second orientation means 4.

At and before a time t0, which is during an initial state, it is assumed that cooperative control is turned off, the orientation angle (that is, the orientation angle error) of the second orientation means 4 is $\alpha$, and the orientation angle of the first orientation means 3 is $\theta_g$ represented by the above expression (3).

At the time t0, cooperative control is turned on in response to an instruction from a user. In the cycle 1, one integration operation using the above expressions (7), (9), and (11) is performed, and the target angle $\theta'_a$ of the first orientation means 3 for cooperative control is set to an angle given by the following expression (14) as indicated by the dashed-dotted line 14 in Fig. 3. In other words, a result of the integration processing by the integrator 17 in the cycle 1 is the orientation angle $\alpha$ itself of the second orientation means 4 that has been input. The adder 18, which calculates the target angle $\theta'_a$ of the first orientation means 3 for cooperative control to remove the orientation angle error $\alpha$ of the second orientation means 4, thus adds the orientation angle $\alpha$ of the second orientation means 4 that is the result of the integration by the integrator 17, to the position-information-based orientation angle $\theta_g$ of the first orientation means 3.

[Mathematical Expression 9]

$$\theta'_a = \theta_g + \alpha \qquad \cdots (1\,4)$$

To simplify explanation, the orientation angle $\alpha$ of the second orientation means 4 is assumed to be given by the following expression (15). Note that $\theta'_a$ is a target angle for cooperative control after the first integration since the turning-on of cooperative control.

[Mathematical Expression 10]

$$\alpha = \theta'_a - \theta_g \qquad \cdots (1\,5)$$

A calculation cycle applied in the explanatory diagram of Fig. 3 is set in advance such that the orientation angle of the first orientation means 3 for cooperative control reaches the target angle $\theta'_a$ of the first orientation means 3 for cooperative control given by expression (14) at a time t1 when the cycle 1 of the calculation cycle ends, as indicated by the solid line 11 in Fig. 3. In this configuration, the orientation angle $\alpha$ of the second orientation means 4 is canceled to '0' as indicated by the long-dashed line 12 in Fig. 3.

At the same time, at the time t1 when a cycle 2 starts, one integration operation using the above expressions (7), (9), and (11) is performed again. At the time t1, however, the orientation angle of the second orientation means 4 is '0' as indicated by the long-dashed line 12 in Fig. 3, so that the target angle $\theta'_a$ of the first orientation means 3 for cooperative control remains unchanged at the angle calculated by expression (14) in the cycle 1 as indicated by the dashed-dotted line 14 in Fig. 3.

Furthermore, at the time t1, the orientation angle of the first orientation means 3 catches up with the target angle $\theta'_a$ of the first orientation means 3 for cooperative control as indicated by the solid line 11 in Fig. 3, so that the orientation angle of the first orientation means 3 remains unchanged and the angle at the time t1 is maintained during the period of the cycle 2 as indicated by the solid line 11 in Fig. 3. Consequently, the orientation angle of the second orientation means 4 remains '0'.

Here, it is assumed that, at a time 2 when the cycle 2 ends and a cycle 3 starts, one of the facing node 2 and the node 1 moves and an optical axis of a light beam emitted by the laser generator 13 in the facing node 2 shifts. By the shift, an error angle occurs at the light-receiving sensor 7 and the orientation angle of the second orientation means 4 changes from '0' to $\alpha$. At the same time, at the time t2 when the cycle 3 starts, one integration operation using expressions (7), (9), and (11) is performed again. This operation changes the target angle $\theta'_a$ of the first orientation means 3 for cooperative control to an angle obtained by integrating the angle calculated by expression (14) in the cycle 1 with the orientation angle $\alpha$ of the second orientation means 4 changed at the time t2. The changed target angle $\theta'_a$ of the first orientation means 3 for cooperative control is given by the following expression (16) as indicated by the dashed-dotted line 14 in Fig. 3.

[Mathematical Expression 11]

$$\theta'_a = \theta_g + 2\alpha \qquad \cdots (16)$$

Consequently, in the period of the cycle 3, the orientation angle of the first orientation means 3 moves toward the target angle $\theta'_a$ given by expression (16). The orientation angle of the first orientation means 3 for cooperative control thus reaches the target angle $\theta'_a$ of the first orientation means 3 for cooperative control given by expression (16) at the time t3 when the cycle 3 of the calculation cycle ends, as indicated by the solid line 11 in Fig. 3. In this configuration, the orientation angle $\alpha$ of the second orientation means 4 is canceled to '0' as indicated by the long-dashed line 12 in Fig. 3.

At the same time, at the time t3 when a cycle 4 starts, one integration operation using the above expressions (7), (9), and (11) is performed again. At the time t3, however, the orientation angle of the second orientation means 4 is '0' as indicated by the long-dashed line 12 in Fig. 3, so that the target angle $\theta'_a$ of the first orientation means 3 for cooperative control remains unchanged at the angle calculated by expression (16) in the cycle 3 as indicated by the dashed-dotted line 14 in Fig. 3.

Furthermore, at the time t3, the orientation angle of the first orientation means 3 catches up with the target angle $\theta'_a$ of the first orientation means 3 for cooperative control as indicated by the solid line 11 in Fig. 3, so that the orientation angle of the first orientation means 3 remains unchanged and the angle at the time t3 is maintained during the period of the cycle 4 as indicated by the solid line 11 in Fig. 3. Consequently, the orientation angle of the second orientation means 4 remains '0'.

Here, it is assumed that, at a time t4 when the cycle 4 ends and a cycle 5 starts, one of the facing node 2 and the node 1 moves and an optical axis of a light beam emitted by the laser generator 13 in the facing node 2 shifts. By the shift, an error angle occurs at the light-receiving sensor 7 and the orientation angle of the second orientation means 4 changes from '0' to $\alpha$. At the same time, at the time t4 when the cycle 5 starts, one integration operation using expressions (7), (9), and (11) is performed again. This operation changes the target angle $\theta'_a$ of the first orientation means 3 for cooperative control to an angle obtained by integrating the angle calculated by expression (16) in the cycle 3 with the orientation angle $\alpha$ of the second orientation means 4 changed at the time t2 as indicated by the dashed-dotted line 14 in Fig. 3. The changed target angle $\theta'_a$ of the first orientation means 3 for cooperative control is given by the following expression (17).

[Mathematical Expression 12]

$$\theta'_a = \theta_g + 3\alpha \qquad \cdots (17)$$

Consequently, in the period of the cycle 5, the orientation angle of the first orientation means 3 moves toward the target angle $\theta'_a$ given by expression (17). The orientation angle of the first orientation means 3 for cooperative control thus reaches the target angle $\theta'_a$ of the first orientation means 3 for cooperative control given by expression (17) at the time t5 when the cycle 5 of the calculation cycle ends, as indicated by the solid line 11 in Fig. 3. In this configuration, the orientation angle $\alpha$ of the second orientation means 4 is canceled to '0' as indicated by the long-dashed line 12 in Fig. 3.

At the same time, at the time t5 when a cycle 6 starts, one integration operation using the above expressions (7), (9), and (11) is performed again. At the time t5, however, the orientation angle of the second orientation means 4 is '0' as indicated by the long-dashed line 12 in Fig. 3, so that the target angle $\theta'_a$ of the first orientation means 3 for cooperative control remains unchanged at the angle calculated by expression (17) in the cycle 5 as indicated by the dashed-dotted line 14 in Fig. 3.

Furthermore, at the time t5, the orientation angle of the first orientation means 3 catches up with the target angle $\theta'_a$ of the first orientation means 3 for cooperative control as indicated by the solid line 11 in Fig. 3, so that the orientation angle of the first orientation means 3 remains unchanged and the angle at the time t5 is maintained during the period of the cycle 6 as indicated by the solid line 11 in Fig. 3. Consequently, the orientation angle of the second orientation means 4 remains '0'.

As described above, this configuration sequentially changes calculation expressions according to the respective calculation cycles, that is, in the order of expression (14) at the cycle 1, expression (16) at the cycle 3, and expression (17) at the cycle 5 for a target angle $\theta'_a$ of the first orientation means 3 for cooperative control, by sequentially integrating, at each calculation cycle, the orientation angle of the first orientation means 3 obtained based on position information with an orientation angle error of the first orientation means 3 obtained by applying kinematics to an orientation angle error of the second orientation means 4. This configuration enables the orientation angle of the first orientation means 3 to reach the target angle $\theta'_a$ of the first orientation means 3 for cooperative control, and the orientation angle error of the second orientation means 4 to be canceled to '0'.

In other words, a cooperative control method in a conventional technique has a problem, as indicated in Fig. 5 illustrating the problem, that a target angle itself of the first orientation means 3 shifts immediately following a rotation operation on an orientation angle of the first orientation means 3 toward the target angle. This shift prevents the original target angle of the first orientation means 3 from being reached, and an orientation angle error of the second orientation means 4 from being canceled. By contrast, the present exemplary embodiment that employs integration operation ensures that such a problem of the conventional technique can be solved.

The following further describes, with reference to Fig. 4, an effect on the integration operation of the integrator in the cooperative control device illustrated in Fig. 1 due to a change in a calculation cycle. Fig. 4 is an explanatory diagram for explaining an example effect on the integration operation of the integrator 17 in the cooperative control device 100 illustrated in Fig. 1 due to a change in a calculation cycle. Fig. 4A illustrates an operation of the integrator 17 performed when a calculation cycle is set to a half (1/2) of the calculation cycle in the explanatory diagram of Fig. 3. Fig. 4B illustrates an operation of the integrator 17 performed when a calculation cycle is set to the same calculation cycle as in the explanatory diagram of Fig. 3.

Note that, as in the explanatory diagram of Fig.3, only one axis, the EL axis, is illustrated in the explanatory diagram of Fig. 4 to simplify explanation. The horizontal axis indicates time, and the vertical axis indicates angle. In the explanatory diagram of Fig. 4, as in the explanatory diagram of Fig.3, the stepwise line indicated by the dashed-dotted line 14 is a trajectory of the target angle $\theta'_a$ of the first orientation means 3 for cooperative control, the curve indicated by the solid line 11 is a trajectory of the orientation angle of the first orientation means 3, and the curve indicated by the long-dashed line 12 is a trajectory of the orientation angle of the second orientation means 4.

Fig. 4B, in which a calculation cycle is set to the same as that in the explanatory diagram of Fig. 3, indicates a case where a shift of the orientation angle of the second orientation means 4 occurs only once at the time t0 during the cycle 1 and the cycle 2 from the time t0 to the time t2 in Fig. 3. In such a case, as in the description of Fig. 3, the target angle $\theta'_a$ of the first orientation means 3 for cooperative control is set to an angle given by the above expression (14) as indicated by the dashed-dotted line 14 in Fig. 4B by one integration operation performed at the time t0 when the cycle 1 starts.

Subsequently, at the time t1 when the calculation cycle 1 ends, as in the description of Fig. 3, the orientation angle of the first orientation means 3 for cooperative control reaches the target angle $\theta'_a$ of the first orientation means 3 for cooperative control given by expression (14), as indicated by the solid line 11 in Fig. 4B. In this configuration, the orientation angle $\alpha$ of the second orientation means 4 is canceled to '0' as indicated by the long-dashed line 12 in Fig. 4B.

At the same time, at the time t1 when the cycle 2 starts, one integration operation using the above expressions (7), (9), and (11) is performed again. At the time t1, however, as in the description of Fig. 3, the orientation angle of the second orientation means 4 is '0' as indicated by the long-dashed line 12 in Fig. 4, so that the target angle $\theta'_a$ of the first orientation means 3 for cooperative control remains unchanged at the angle calculated by expression (14) in the cycle 1 as indicated by the dashed-dotted line 14 in Fig. 4B.

Furthermore, at the time t1, as in the description of Fig. 3, the orientation angle of the first orientation means 3 catches up with the target angle $\theta'_a$ of the first orientation means 3 for cooperative control as indicated by the solid line 11 in Fig. 4B, so that the orientation angle of the first orientation means 3 remains unchanged and the angle at the time t1 is maintained during the period of the cycle 2 as indicated by the solid line 11 in Fig. 4B. Consequently, the orientation angle of the second orientation means 4 remains '0'.

As described above, the case of Fig. 4B is different from that described for Fig. 3 in that, at and after the period of the cycle 2, an optical axis of a light beam emitted by the laser generator 13 in the facing node 2 does not shift. The orientation angle of the second orientation means 4 thus remains '0' as indicated by the solid line 11 in Fig. 4B.

Fig. 4A illustrates a case where, as described above, a calculation cycle is set to a half (1/2) of the calculation cycle in Fig. 3. That is, the period from the time t0 to the time t2 is divided into four periods in the period from a time t0' to a time t4' corresponding to four respective calculation cycles from a cycle 1' to a cycle 4', instead of the two calculation cycles of the cycle 1 and the cycle 2 as in the case of Fig. 3 and Fig. 4B.

At and before the time t0', which is during an initial state, as in the cases of Fig. 3 and Fig. 4B, cooperative control is turned off, the orientation angle (that is, the orientation angle error) of the second orientation means 4 is $\alpha$, and the orientation angle of the first orientation means 3 is $\theta_g$ represented by the above expression (3).

At the time t0', cooperative control is turned on in response to an instruction from a user. In the cycle 1', as in the cases of Fig. 3 and Fig. 4B, one integration operation using the above expressions (7), (9), and (11) is performed, and the target angle $\theta'_a$ of the first orientation means 3 for cooperative control rises to an angle given by the above expression (14), as indicated by the dashed-dotted line 14 in Fig. 4A. In other words, a result of the integration processing by the integrator 17 in the cycle 1' is the orientation angle $\alpha$ itself of the second orientation means 4 that has been input. The adder 18, which calculates the target angle $\theta'_a$ of the first orientation means 3 for cooperative control to remove the orientation angle error $\delta$ of the second orientation means 4, thus adds the orientation angle $\alpha$ of the second orientation means 4 that is the result of the integration by the integrator 17, to the position-information-based orientation angle $\theta_g$ of the first orientation means 3. To simplify explanation, the orientation angle $\alpha$ of the second orientation means 4 is assumed to be given by the above expression (15), as in the case of Fig.3.

At the time t1' when the calculation cycle 1' ends, because the calculation cycle is set to a half (1/2) of the calculation cycle in Fig. 3, the orientation angle of the first orientation means 3 for cooperative control cannot reach the target angle $\theta'_a$ of the first orientation means 3 for cooperative control given by expression (14), and remains at the angle that is half the target angle $\theta'_a$ of the first orientation means 3 as indicated by the solid line 11 in Fig. 4A. The remained orientation angle of the first orientation means 3 for cooperative control is represented by the following expression (18).

[Mathematical Expression 13]

$$ \theta_g + \left( \frac{1}{2} \right) \alpha \qquad\qquad \cdots\ (1\ 8) $$

In this configuration, at the time t1' when the cycle 1' of the calculation cycle ends, the orientation angle $\alpha$ of the second orientation means 4 is not canceled, that is, remains at ($\alpha/2$) without being reduced to '0' as indicated by the long-dashed line 12 in Fig. 4A, in contrast to the case of Fig. 3.

At the same time, at the time t1' when the cycle 2' starts, one integration operation using the above expressions (7), (9), and (11) is performed again. At the time t1', however, the orientation angle of the second orientation means 4 remains at ($\alpha/2$) as indicated by the long-dashed line 12 in Fig. 4A, so that the target angle $\theta'_a$ of the first orientation means 3 for cooperative control overshoots the target angle of the first orientation means 3 for cooperative control given by the following expression (19) as indicated by the dashed-dotted line 14 in Fig. 4A, or by expression (14) in the case of Fig. 4B, in contrast to the case of Fig. 3.

[Mathematical Expression 14]

$$ \theta'_a = \theta_g + \alpha + \frac{\alpha}{2} = \theta_g + \left( \frac{3}{2} \right) \alpha \qquad\qquad \cdots\ (1\ 9) $$

At the time t2' when the cycle 2' of the calculation cycle ends, because the calculation cycle is set to a half (1/2) of the calculation cycle in Fig. 3, the orientation angle of the first orientation means 3 for cooperative control reaches the target angle $\theta'_a$ of the first orientation means 3 for cooperative control having been given by expression (14) in the cycle 1' as illustrated by the solid line 11 in Fig. 4A, when the two calculation cycles of the cycle 1' and the cycle 2' end.

In this configuration, at the time t2' when the cycle 2' of the calculation cycle ends, the orientation angle ($\alpha/2$) of the second orientation means 4 is canceled to '0' as indicated by the long-dashed line 12 in Fig. 4A.

At the same time, at the time t2' when a cycle 3' starts, one integration operation using the above expressions (7), (9), and (11) is performed again. At the time t2', however, the orientation angle of the second orientation means 4 is '0' as indicated by the long-dashed line 12 in Fig. 4A, so that the target angle $\theta'_a$ of the first orientation means 3 for cooperative control remains unchanged at the angle calculated by expression (19) in the cycle 2' as indicated by the dashed-dotted line 14 in Fig. 4A.

At this point, at the time t2', the orientation angle of the first orientation means 3 has not caught up with the target angle $\theta'_a$ of the first orientation means 3 for cooperative control as indicated by the solid line 11 in Fig. 4A, and thus the orientation angle of the first orientation means 3 for cooperative control keeps changing during the period of the cycle 3' so that it catches up with the target angle $\theta'_a$ of the first orientation means 3 for cooperative control given by expression (19) as indicated by the solid line 11 in Fig. 4A. Consequently, at the time t3' when the cycle 3' ends, the orientation angle of the first orientation means 3 finally catches up with the target angle $\theta'_a$ of the first orientation means 3 for cooperative control as indicated by the solid line 11 in Fig. 4A.

In this configuration, the orientation angle of the second orientation means 4 is canceled to '0' at the time t2' when the cycle 2' of the calculation cycle ends as indicated by the long-dashed line 12 in Fig. 4A. During the period of the cycle 3', the orientation angle of the second orientation means 4 further undershoots '0' and keeps changing, and reaches a value -($\alpha/2$) at the time t3' when the cycle 3' ends.

At the same time, at the time t3' when a cycle 4' starts, one integration operation using the above expressions (7), (9), and (11) is performed again. At the time t3', however, the orientation angle of the second orientation means 4 has undershot '0' and reaches -($\alpha$/2) as indicated by the long-dashed line 12 in Fig. 4A, so that the target angle $\theta'_a$ of the first orientation means 3 for cooperative control is the same angle as the target angle of the first orientation means 3 for cooperative control given by the following expression (20), or by expression (14) in the case of Fig. 4B, as indicated by the dashed-dotted line 14 in Fig. 4A.

[Mathematical Expression 15]

$$\theta'_a = \theta_g + \left(\frac{3}{2}\right)\alpha - \left(\frac{1}{2}\right)\alpha = \theta_g + \alpha \qquad \cdots (2\,0)$$

At the time t4' when the cycle 4' of the calculation cycle ends, the orientation angle of the first orientation means 3 for cooperative control reaches the target angle $\theta'_a$ of the first orientation means 3 for cooperative control given by expression (20), as indicated by the solid line 11 in Fig. 4A. In this configuration, the orientation angle $\alpha$ of the second orientation means 4 is canceled to '0' as indicated by the long-dashed line 12 in Fig. 4A.

At the same time, at the time t4 when a cycle 5' starts, one integration operation using the above expressions (7), (9), and (11) is performed again. At the time t4', however, the orientation angle of the second orientation means 4 is '0' as indicated by the long-dashed line 12 in Fig. 4A, so that the target angle $\theta'_a$ of the first orientation means 3 for cooperative control remains at the angle calculated by expression (20) in the cycle 4' as indicated by the dashed-dotted line 14 in Fig. 4A.

Furthermore, at the time t4', the orientation angle of the first orientation means 3 catches up with the target angle $\theta'_a$ of the first orientation means 3 for cooperative control as indicated by the solid line 11 in Fig. 4A, so that the orientation angle of the first orientation means 3 remains unchanged and the angle at the time t4' is maintained during the period of the cycle 5' as indicated by the solid line 11 in Fig. 4A. Consequently, the orientation angle of the second orientation means 4 remains '0'.

In the case of Fig. 4A, as in the case of Fig. 4B, at and after the period of the cycle 5', an optical axis of a light beam emitted by the laser generator 13 in the facing node 2 does not shift, and the orientation angle of the first orientation means 3 catches up with the target angle $\theta'_a$ of the first orientation means 3 for cooperative control. The orientation angle of the first orientation means 3 thus remains unchanged as indicated by the solid line 11 in Fig. 4A, and the orientation angle of the second orientation means 4 remains '0' as indicated by the long-dashed line 12 in Fig. 4A, regardless of the number of times the integration operation using the expressions (7), (9), and (11) is repeated at calculation cycles.

As described above, when a calculation cycle is set to a half (1/2) of the calculation cycle in Fig. 3, the orientation angle of the first orientation means 3 cannot reach the target angle $\theta'_a$ of the first orientation means 3 for cooperative control within the cycle 1' (the calculation cycle from the time t0' to the time t1') immediately after cooperative control is turned on, as illustrated in Fig. 4A. The orientation angle $\alpha$ of the second orientation means 4 thus cannot be canceled. Consequently, at the calculation cycles after the cycle 1', an overshoot of the target angle $\theta'_a$ of the first orientation means 3 occurs due to an effect of the integration. This overshoot slows convergence to a state in which the orientation angle of the first orientation means 3 catches up with the target angle $\theta'_a$ of the first orientation means 3 for cooperative control and in which the orientation angle of the second orientation means 4 is canceled and kept at '0', compared to the case of Fig. 4B illustrating the same cycles as the calculation cycles in Fig. 3.

A solution to such a slow convergence is to stop the integration operation that has been performed by the integrator 17 at each calculation cycle until the orientation angle of the first orientation means 3 reaches the target angle $\theta'$ of the first orientation means 3 for cooperative control. In other words, stopping the integration operation prevents the overshoot of the target angle $\theta'_a$ of the first orientation means 3, thereby making it possible to resolve the occurrence of the slow convergence.

While the above exemplary embodiment describes a case in which the position-information-based orientation angle generator 15 of the cooperative control device 100 illustrated in Fig. 1 generates a position-information-based target angle $\theta_g$ of the first orientation means 3 using only the position information of the node 1 and the facing node 2, the used information is not limited to the position information of the node 1 and the facing node 2. Attitude information of the node 1 and the facing node 2 may be added to the position information of the node 1 and the facing node 2. In other words, the device node position information acquisition unit 8 and the facing node position information acquisition unit 14 serving as position information acquisition means may acquire not only the position information of the node 1 and the facing node 2 but also the attitude information of the node 1 and the facing node 2 with an attitude sensor, and may supply the information to the position-information-based orientation angle generator 15.

While the description of the above exemplary embodiment has been made on the assumption that the orientation means includes two rotation axes, the present invention is not limited to this exemplary embodiment. In other words, the orientation means may include three or more axes. In this case, completely the same cooperative control as that of the above-described exemplary embodiment may be performed by controlling the converter 16 in the cooperative control device 100 illustrated in Fig. 1 to convert orientation angle errors of respective axes of the orientation means, the orientation angle errors of which is to be canceled (removed), to orientation angle errors of respective axes of the other orientation means using kinematic formulation represented by the above expression (1) for example.

While the description of the above exemplary embodiment has been made on the assumption that the orientation means includes two orientation means of the first orientation means 3 and the second orientation means 4, the present invention is not limited to this exemplary embodiment. In other words, the orientation means may include three or more orientation means. In this case, completely the same cooperative control as that of the above-described exemplary embodiment may be performed by controlling the converter 16 in the cooperative control device 100 illustrated in Fig. 1 to convert orientation angle errors of one orientation means, the orientation angle errors of which is to be canceled (removed), to orientation angle errors of the other respective orientation means using kinematic formulation represented by the above expression (1) for example.

(Explanation of Advantageous Effects of Exemplary Embodiment) As described above, the present embodiment provides the following advantageous effects.

In the two orientation means, the first orientation means 3 and the second orientation means 4 used for receiving optical signals from the facing node 2, an orientation angle error of the first orientation means 3 is obtained by applying kinematics to an orientation angle error $\alpha$ of the second orientation means 4 by the converter 16 and the integrator 17, the obtained orientation angle error of the first orientation means 3 is integrated, at each calculation cycle, as a target error angle, and then the integration result is used to calculate, by the adder 18, a target angle $\theta'_a$ of the first orientation means 3 for cooperative control. This operation makes it possible to ensure that the orientation angle of the first orientation means 3 reaches the target angle $\theta'_a$ of the first orientation means 3 for cooperative control, and that the orientation angle error $\alpha$ of the second orientation means 4 is canceled.

Furthermore, the orientation angle error can be canceled more finely, for example, by using not only position information on the node 1 and the facing node 2 but also attitude information on the node 1 and the facing node 2, by using two axes, or three or more axes as the rotation axes of the first orientation means 3 and the second orientation means 4, and by using two orientation means, that is, the first orientation means 3 and the second orientation means 4, or three more orientation means as the orientation means, when generating the position-information-based target angle $\theta_g$ of the first orientation means 3.

While certain configurations of a preferred exemplary embodiment according to the present invention have been described above, the exemplary embodiment has been presented by way of example only, and is not intended to limit the scope of the invention. It will be understood by those of ordinary skill in the art that various changes and modifications according to specific use may be made therein without departing from the spirit and scope of the present invention.

This application is based upon and claims the benefit of priority from Japanese patent application No. 2012-163539, filed on July 24, 2012, the disclosure of which is incorporated herein in its entirety by reference.

[Reference Signs List]

| | |
|---|---|
| 1 | node (of the device) |
| 2 | facing node |
| 3 | first orientation means |
| 4 | second orientation means |
| 5 | first orientation means angle sensor |
| 6 | second orientation means angle sensor |
| 7 | light-receiving sensor |
| 8 | device node position information acquisition unit |
| 9 | second controller |
| 10 | second driver |
| 11 | first controller |
| 12 | first driver |
| 13 | laser generator |
| 14 | facing node position information acquisition unit |
| 15 | position-information-based orientation angle generator |
| 16 | converter |
| 17 | integrator |
| 18 | adder |

100  cooperative control device
11   solid line
12   long-dashed line
13   short-dashed line
14   dashed-dotted line

**Claims**

1.  A cooperative control device that cooperatively controls two orientation means of a first orientation means and a second orientation means included as orientation means used for receiving optical signals from a facing node, the cooperative control device comprising:

    a position information acquisition means for acquiring position information on a node of the device and the facing node, or both of the position information and attitude information on the node and the facing node;
    an orientation angle generation means for calculating a position-information-based target angle of the first orientation means using the position information on the node and the facing node acquired by the position information acquisition means, or both of the position information and the attitude information on the node and the facing node;
    a conversion means for converting the position-information-based target angle of the first orientation means calculated by the orientation angle generation means to a kinematics-used target angle of the first orientation means by applying kinematics to an orientation angle error of the second orientation means, the kinematics-used target angle of the first orientation means being used for removing the orientation angle error of the second orientation means;
    an integration means for integrating a target error angle of the first orientation means obtained by subtracting the position-information-based target angle of the first orientation means from the kinematics-used target angle of the first orientation means converted by the conversion means; and
    an addition means for adding the target error angle of the first orientation means integrated by the integration means to the position-information-based target angle of the first orientation means, to output a target angle of the first orientation means for cooperative control, the target angle being capable of removing the orientation angle error of the second orientation means.

2.  The cooperative control device according to claim 1, wherein the integration means performs an integration operation on the target error angle of the first orientation means by the integration means at each predetermined calculation cycle.

3.  The cooperative control device according to claim 1 or 2, wherein an integration operation by the integration means stops until the orientation angle of the first operation means reaches the target angle of the first orientation means for cooperative control.

4.  The cooperative control device according to any one of claims 1 to 3, wherein the first orientation means and the second orientation means each include two or more rotation axes, and the conversion means converts orientation angle errors of the respective axes of the second orientation means, among the two orientation means of the first orientation means and the second orientation means, that is subject to removal of the orientation angle errors, to orientation angle errors of the respective axes of the first orientation means using kinematic formulation.

5.  The cooperative control device according to any one of claims 1 to 4, wherein the orientation means are not the two orientation means of the first orientation means and the second orientation means but are three or more orientation means, and the conversion means converts orientation angle errors of one orientation means, among the three or more orientation means, that is subject to removal of the orientation angle errors, to orientation angle errors of the other respective orientation means using kinematic formulation.

6.  A cooperative control method that cooperatively controls two orientation means of a first orientation means and a second orientation means included as orientation means used for receiving optical signals from a facing node, the cooperative control method comprising:

    a step for acquiring position information on a node of the device and the facing node, or both of the position information and attitude information on the node and the facing node;

a step for generating an orientation angle by calculating a position-information-based target angle of the first orientation means using the position information on the node and the facing node acquired by the step for acquiring, or both of the position information and the attitude information on the node and the facing node;

a step for converting the position-information-based target angle of the first orientation means calculated by the step for generating to a kinematics-used target angle of the first orientation means by applying kinematics to an orientation angle error of the second orientation means, the kinematics-used target angle of the first orientation means being used for removing the orientation angle error of the second orientation means;

a step for integrating a target error angle of the first orientation means obtained by subtracting the position-information-based target angle of the first orientation means from the kinematics-used target angle of the first orientation means converted by the step for converting; and

a step for adding the target error angle of the first orientation means integrated by the step for integrating to the position-information-based target angle of the first orientation means, to output a target angle of the first orientation means for cooperative control, the target angle being capable of removing the orientation angle error of the second orientation means.

7. The cooperative control method according to claim 6, wherein the step for integrating performs an integration operation on the target error angle of the first orientation means by the step for integrating at each predetermined calculation cycle.

8. The cooperative control method according to claim 6 or 7, wherein an integration operation by the step for integrating stops until an orientation angle of the first operation means reaches the target angle of the first orientation means for cooperative control.

9. The cooperative control method according to any one of claims 6 to 8, wherein the orientation means are not the two orientation means of the first orientation means and the second orientation means but are three or more orientation means, and the step for converting converts orientation angle errors of one orientation means, among the three or more orientation means, that is subject to removal of the orientation angle errors, to orientation angle errors of the other respective orientation means using kinematic formulation.

10. A recording medium that stores therein a cooperative control program that is capable of causing a computer to implement the cooperative control method according to any one of claims 6 to 9.

Fig.1

Fig.2

START

S1

IS POWER TURNED ON? — NO

YES

S2

$$\Delta\psi'_{gsum} = \Delta\theta'_{gsum} = 0 \quad \text{EXPRESSION (12)}$$

S3

$$\psi_g = \tan^{-1}(b/a) \quad \text{EXPRESSION (2)}$$

$$\theta_g = -\cos^{-1}\left(\frac{c}{l_i}\right) \quad \text{EXPRESSION (3)}$$

S4

IS COOPERATIVE CONTROL TURNED ON? — NO

YES

S5

$$\psi'_g = \tan^{-1}\frac{\sin\psi_g\left(\sqrt{1-\tan^2\alpha-\tan^2\beta}\cdot\sin\theta_g + \tan\alpha\cdot\cos\theta_g\right)+\cos\psi_g\cdot\tan\beta}{\cos\psi_g\left(\sqrt{1-\tan^2\alpha-\tan^2\beta}\cdot\sin\theta_g + \tan\alpha\cdot\cos\theta_g\right)-\sin\psi_g\cdot\tan\beta}$$

EXPRESSION (6)

$$\theta'_g = -\cos^{-1}\left(\sqrt{1-\tan^2\alpha-\tan^2\beta}\cdot\cos\theta_g - \tan\alpha\cdot\sin\theta_g\right) \quad \text{EXPRESSION (7)}$$

$$\Delta\psi'_{gsum} = \sum\left(\psi'_g - \psi_g\right) \quad \text{EXPRESSION (8)}$$

$$\Delta\theta'_{gsum} = \sum\left(\theta'_g - \theta_g\right) \quad \text{EXPRESSION (9)}$$

$$\psi'_a = \Delta\psi'_{gsum} + \psi_g \quad \text{EXPRESSION (10)}$$

$$\theta'_a = \Delta\theta'_{gsum} + \theta_g \quad \text{EXPRESSION (11)}$$

S6

$$t = t + \Delta t$$

18

# Fig.3

TARGET ANGLE $\theta'$a OF
FIRST ORIENTATION
MEANS 3 FOR
COOPERATIVE CONTROL

$\theta'_a = \theta_g + 3\alpha$

$\theta'_a = \theta_g + 2\alpha$

$\theta'_a = \theta_g + \alpha$

ORIENTATION
ANGLE OF FIRST
ORIENTATION
MEANS 3

ORIENTATION
ANGLE OF
SECOND
ORIENTATION
MEANS 4

ANGLE

$\alpha$

$\theta_g$

TIME

t0    t1    t2    t3    t4    t5    t6

CALCULATION
CYCLE

EP 2 879 313 A1

## Fig.4A

EP 2 879 313 A1

# Fig.4B

ORIENTATION
ANGLE OF FIRST
ORIENTATION
MEANS 3

TARGET ANGLE $\theta'a$ OF
FIRST ORIENTATION
MEANS 3 FOR
COOPERATIVE CONTROL

$\theta'_a = \theta_g + \alpha$

$\alpha$

14

11

12

ANGLE

$\theta_g$

ORIENTATION
ANGLE OF
SECOND
ORIENTATION
MEANS 4

TIME

CYCLE 1

CYCLE 2

CALCULATION
CYCLE

t0

t1

t2

EP 2 879 313 A1

# Fig.5

$\alpha$

$\theta'_g$

ORIENTATION ANGLE
OF SECOND
ORIENTATION MEANS 4

TARGET ANGLE OF
FIRST ORIENTATION
MEANS 4

l2

l3

$\alpha''$

$\theta''_g$

ANGLE

l1

ORIENTATION ANGLE
OF FIRST ORIENTATION
MEANS 4

$\theta_g$

TIME

\* $\alpha = \theta'_g - \theta_g$ IS ASSUMED FOR SIMPLICITY

## INTERNATIONAL SEARCH REPORT

| International application No. |
| --- |
| PCT/JP2013/001974 |

**A. CLASSIFICATION OF SUBJECT MATTER**
*H04B10/112*(2013.01)i, *G01S3/786*(2006.01)i, *G05B11/36*(2006.01)i

According to International Patent Classification (IPC) or to both national classification and IPC

**B. FIELDS SEARCHED**

Minimum documentation searched (classification system followed by classification symbols)
H04B10/112, G01S3/786, G05B11/36

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | Motoaki SHIMIZU, "Hikari Kukan Tsushin ni Okeru Kijo Tosai Tsuibi Seigyokei no Kyocho Seigyo Algorithm", Dai 49 Kai Hikoki Symposium, The Japan Society for Aeronautical and Space Sciences, 28 October 2011 (28.10.2011), pages 820 to 826 | 1-10 |
| A | JP 2002-341006 A (NEC Toshiba Space System Kabushiki Kaisha), 27 November 2002 (27.11.2002), paragraphs [0018] to [0030]; fig. 1 (Family: none) | 1-10 |
| A | JP 11-109012 A (NEC Corp.), 23 April 1999 (23.04.1999), paragraphs [0016] to [0030], [0041]; fig. 1 (Family: none) | 1-10 |

☐ Further documents are listed in the continuation of Box C.      ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 01 May, 2013 (01.05.13) | 14 May, 2013 (14.05.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012163539 A

**Non-patent literature cited in the description**

- **MOTOAKI SHIMIZU et al.** A Cooperative Control Algorithm of the On Board Tracking Control System for Free-Space Optical Communications. *49th Aircraft Symposium*

- **MOTOAKI SHIMIZU et al.** A Cooperative Control Algorithm of the On Board Tracking Control System for Free-Space Optical Communications. *49th Aircraft Symposium,* October 2011